# EUROPEAN PATENT SPECIFICATION

(11) **EP 3 926 593 B1**
(45) Date of publication and mention of the grant of the patent: **28.01.2026**
(21) Application number: 20756266.1
(22) Date of filing: 28.01.2020
(51) Int. Cl.: G07D 11/26, G07D 11/60, G07D 11/235

(54) **VALUABLE MEDIUM PROCESSING DEVICE, AND VALUABLE MEDIUM PROCESSING METHOD**
VERARBEITUNGSVORRICHTUNG FÜR WERTVOLLES MEDIUM, UND VERARBEITUNGSVERFAHREN FÜR WERTVOLLES MEDIUM
DISPOSITIF DE TRAITEMENT DE SUPPORTS DE VALEUR, ET PROCÉDÉ DE TRAITEMENT DE SUPPORTS DE VALEUR

(30) Priority: 12.02.2019 JP 2019022733
(43) Date of publication of application: 22.12.2021
(73) Proprietor: GLORY LTD., Himeji-shi Hyogo 670-8567 (JP)
(72) Inventor: WATANABE, Michifumi, Himeji-shi, Hyogo 670-8567 (JP)
(74) Representative: SSM Sandmair
(86) International application number: PCT/JP2020/003005
(87) International publication number: WO 2020/166319

(56) References cited:
- WO-A1-2017/126410
- JP-A- 2003 178 352
- JP-A- 2007 026 067
- JP-A- 2010 113 450
- JP-U- S56 118 450
- US-A1- 2011 235 893
- US-A1- 2015 076 223
- US-B1- 8 327 995

## Description

### TECHNICAL FIELD

The present invention relates to a valuable medium handling apparatus, a valuable medium handling system, and a valuable medium handling method.

### BACKGROUND ART

Conventionally, money handling machines have been used to perform processes of money such as a depositing process, a dispensing process, etc. Among such money handling machines, there is a money handling machine that performs a guide process when an abnormality such as a jam of money, miscalculation, etc., occurs. In the guide process, a procedure of a restoration operation and an image of a part to be operated for the restoration operation are displayed stepwise according to the progress of the restoration operation such that the restoration operation can be performed by an operator who is, for example, a bank employee or a staff member of a distribution store. For example, Patent Literature 1 discloses a money handling machine that guides a restoration operation based on the skill level of an operator in order to prevent an operation from becoming bothersome for a skilled operator.

US 8 327 995 B1 discloses: A cash recycler or other currency handling device includes an environmental condition monitoring system including a plurality of sensors configured to monitor environmental conditions inside the housing of the cash recycler. In some arrangements, the temperature and/or humidity within the housing will be monitored. Upon sensing that the conditions are outside of a predetermined threshold, an indication will be sent to a controller that will adjust operation of the cash recycler based on the indications received from the sensors.

US 2011/235893 A1 discloses: There is provided a banknote handling system including: a reception unit configured to receive a banknote that has been put therein; a recognition unit configured to recognize the banknote that has been received by the reception unit; a storing unit having at least one first cassette configured to store or escrow the banknote that has been recognized by the recognition unit, and at least one second cassette configured to store the banknote that has been recognized by the recognition unit; an operation unit configured to receive a deposit-confirmation instruction for the banknote that has been escrowed in the first cassette; and a control unit configured to cause the banknote that has been recognized by the recognition unit to be escrowed in the first cassette and to cause, when the deposit-confirmation instruction is received by the operation unit, the banknote that has been escrowed in the first cassette to be stored in the second cassette.

US 2015/076223 A1 discloses: An automated banking machine is operable to cause financial transfers responsive to data read from data bearing records. The machine includes a card reader that can read from cards, user data that corresponds to financial accounts. The machine can operate responsive to the read card data to carry out transactions that transfer and/or allocate funds between accounts. The machine can provide a transaction receipt. The machine includes a cash dispenser to dispense cash to machine users. Value of dispensed cash can be assessed to an account which corresponds to read card data. The machine also includes a check acceptor device that can receive checks from users. The machine can image a received check and then read check data from the check image. An account determined from read card data can be credited the amount of the check.

### CITATION LIST

### [PATENT LITERATURE]

[PTL 1] Japanese Laid-Open Patent Publication No. 2010-113450

### SUMMARY OF THE INVENTION

### PROBLEMS TO BE SOLVED BY THE INVENTION

However, in the money handling machine as in Patent Literature 1, there is a problem that an operator cannot immediately recognize whether or not the money handling machine is covered by a maintenance service. When the money handling machine is covered by the maintenance service, the operator (for example, a bank employee or a staff member of a distribution store) does not necessarily have to take time and effort to eliminate the abnormal state of the money handling machine.

Furthermore, for the apparatus as in Patent Literature 1, the operator themselves performs the restoration operation. Therefore, there is also a problem that if the operator performs an incorrect restoration operation, the abnormal state of the money handling machine may become more complicated, and it may hinder subsequent smooth restoration work by maintenance personnel.

In other words, in the conventional art represented by Patent Literature 1, it is not taken into consideration whether or not the machine is covered by the maintenance service, and it is assumed that the restoration operation is to be performed by the operator themselves. As a result, there are some cases where the operator makes the situation worse and the restoration operation for eliminating the abnormal state cannot be performed efficiently.

The present invention has been made to solve the above problems of the prior art, and an object of the present invention is to provide a technology for more efficiently eliminating an abnormal state of a valuable medium handling apparatus.

### SOLUTION TO THE PROBLEMS

In order to solve the above problems, a valuable medium handling apparatus according to the present invention according to claim 1 is a valuable medium handling apparatus for handling valuable media, including: a maintenance information acquisition unit configured to acquire information related to a maintenance service for the valuable medium handling apparatus; and a notification unit configured to notify of the information acquired by the maintenance information acquisition unit.

In the valuable medium handling apparatus according to the present invention, the maintenance information acquisition unit acquires at least information indicating whether or not there is a valid contract for receiving the maintenance service.

In the valuable medium handling apparatus according to the present invention, when the valuable medium handling apparatus comes into an abnormal state, the notification unit performs notification.

In the valuable medium handling apparatus according to the present invention, the valuable medium handling apparatus stores valuable media therein, and, when the valuable medium handling apparatus comes into a miscalculation state, the notification unit performs notification.

In the valuable medium handling apparatus according to the present invention, the valuable medium handling apparatus performs a reconciliation process to count the valuable media in the money handling apparatus, and the miscalculation state is detected through the reconciliation process.

The valuable medium handling apparatus according to the present invention further includes an operation unit, and, when a predetermined operation is performed on the operation unit, the notification unit performs notification.

The valuable medium handling apparatus according to the present invention further includes a communication unit configured to output information related to the abnormal state, to an external terminal, and the information related to the abnormal state includes at least one of information on a location of the valuable medium handling apparatus that comes into the abnormal state, information on a type of the abnormal state, date and time when the valuable medium handling apparatus comes into the abnormal state, and information on a state history of the valuable medium handling apparatus that comes into the abnormal state.

The valuable medium handling apparatus according to the present invention further includes a receiving unit configured to receive a response to the information outputted from the communication unit, from the external terminal, and the notification unit notifies that a maintenance person is in the middle of handling, based on the response received by the receiving unit.

The valuable medium handling apparatus according to the present invention further includes a fallback processing unit configured to, when the valuable medium handling apparatus comes into an abnormal state and a contract for the maintenance service is valid, make the valuable medium handling apparatus operate in a fallback state in which a part of functions of the valuable medium handling apparatus is restricted.

In the valuable medium handling apparatus according to the present invention, the fallback processing unit restricts an operation by an operator according to the restriction on the functions.

In the valuable medium handling apparatus according to the present invention, the fallback processing unit restricts movement of money which may cause the abnormal state.

In the valuable medium handling apparatus according to the present invention, the valuable medium handling apparatus includes a plurality of units, and the fallback processing unit stops operation of at least one of the plurality of units.

A valuable medium handling system according to the present invention is a valuable medium handling system including a valuable medium handling apparatus for handling valuable media, the valuable medium handling system including: a maintenance information acquisition unit configured to acquire information related to a maintenance service for the valuable medium handling apparatus; and a notification unit configured to notify of the information acquired by the maintenance information acquisition unit.

A valuable medium handling method according to the present invention according to claim 11 is a valuable medium handling method performed by a valuable medium handling apparatus for handling valuable media, the valuable medium handling method including: acquiring information related to a maintenance service for the valuable medium handling apparatus; and notifying of the information acquired in the maintenance information acquisition step.

### ADVANTAGEOUS EFFECTS OF THE INVENTION

According to the present invention, an abnormal state of the valuable medium handling apparatus can be more efficiently eliminated.

### BRIEF DESCRIPTION OF THE DRAWINGS

[FIG. 1] FIG. 1 illustrates an outline of a money handling apparatus according to an embodiment.
[FIG. 2] FIG. 2 is an external view of the money handling apparatus according to the embodiment.
[FIG. 3] FIG. 3 is a functional block diagram showing the control configuration of the money handling apparatus shown in FIG. 2.
[FIGS. 4A and 4B] FIGS. 4A and 4B show examples of data stored in a memory shown in FIG. 3.
[FIG. 5] FIG. 5 is a flowchart showing a procedure of processing performed by the money handling apparatus.
[FIG. 6] FIG. 6 is a flowchart showing a procedure of processing performed by starting fallback operation shown in FIG. 5.
[FIG. 7] FIG. 7 illustrates exclusion of confidential information.
[FIG. 8] FIG. 8 shows a specific example of a notification screen displayed on an operation display unit by a notification unit.
[FIG. 9] FIG. 9 illustrates a modified example of a network configuration.

### DESCRIPTION OF EMBODIMENTS

Hereinafter, a preferred embodiment of the valuable medium handling apparatus, the valuable medium handling system, and the valuable medium handling method according to the present invention will be described in detail with reference to the accompanying drawings. In the present embodiment, the case where the present invention is applied to a money handling apparatus that includes a storage unit which can store any of unfit notes, unfit coins, checks, and vouchers, and that can mechanically deposit and dispense money which is any of loose banknotes, banknote bundles, loose coins, and wrapped coins, will be described.

### <Outline of money handling apparatus 1 according to embodiment>

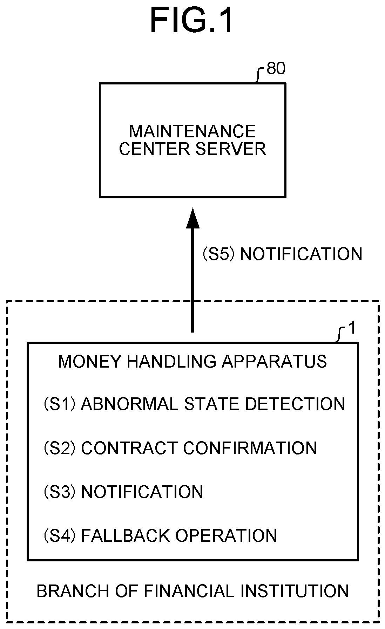

An outline of a money handling apparatus 1 according to the present embodiment will be described. FIG. 1 illustrates the outline of the money handling apparatus 1 according to the present embodiment. For example, the money handling apparatus 1 is installed at a branch of a financial institution. The money handling apparatus 1 is used for depositing/dispensing of valuable media including money and managing the valuable media.

The money handling apparatus 1 has data indicating whether or not the money handling apparatus 1 is covered by a maintenance service. The money handling apparatus 1 is communicably connected to a maintenance center server 80 disposed outside the branch. The money handling apparatus 1 detects an abnormal state such as jamming of money or miscalculation (S1). When the money handling apparatus 1 detects an abnormal state, the money handling apparatus 1 performs a contract confirmation process for confirming whether or not the money handling apparatus 1 is covered by a contract of the maintenance service (S2).

As a result of the confirmation, if the money handling apparatus 1 is a target of the maintenance service, the money handling apparatus 1 notifies an operator that the money handling apparatus 1 is a target of the maintenance service (S3), and performs a fallback operation to restrict the function related to the abnormality (S4). In addition, the money handling apparatus 1 notifies the maintenance center server 80 of the occurrence of the abnormality (S5). Upon receiving the notification, the maintenance center server 80 performs a process for dispatching a maintenance person to the branch of the financial institution and causing the maintenance person to restore the money handling apparatus 1.

If the money handling apparatus 1 is a target of the maintenance service, the money handling apparatus 1 notifies the operator that the money handling apparatus 1 is a target of the maintenance service, whereby the operator can recognize that the operator does not have to eliminate the abnormal state. In addition, the money handling apparatus 1 restricts the function related to the abnormality through the fallback operation, whereby a risk of causing a more serious state by the operator trying to recover from the abnormality can be avoided. Therefore, smooth restoration work by the maintenance person is not hindered, and the abnormal state of the money handling machine can be efficiently eliminated.

### <External configuration of money handling apparatus 1>

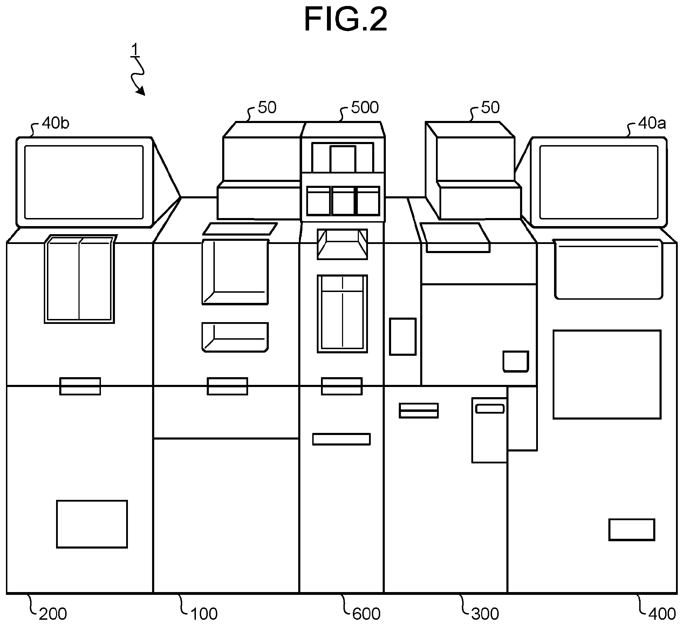

The external configuration of the money handling apparatus 1 according to the present embodiment will be described. FIG. 2 is an external view of the money handling apparatus 1 according to the present embodiment. As shown in FIG. 2, the money handling apparatus 1 includes a loose note handling unit 100, a banknote bundle handling unit 200, a loose coin handling unit 300, a wrapped coin handling unit 400, an unfit coin handling unit 500, and an unfit note handling unit 600. A first operation display unit 40a (operation unit), a second operation display unit 40b (operation unit), and printers 50 are disposed at an upper portion of the money handling apparatus 1. Two operators can perform various operations and check displayed information by using these operation display units 40a and 40b.

The front surface of a housing of the loose note handling unit 100 is provided with a loose note inlet for receiving loose banknotes to be deposited. When loose banknotes are put into the loose note inlet, the loose note handling unit 100 feeds the banknotes, one by one, into inside the unit, recognizes each banknote, and stores the recognized banknotes for each denomination. In the depositing process, a banknote, which has been recognized as a banknote to be rejected, is returned to a deposit reject unit. When loose banknotes are to be dispensed from the loose note handling unit 100, the banknotes can be taken out from a loose note outlet in the upper surface of the housing.

The banknote bundle handling unit 200 can store therein a banknote bundle (banknotes bundled by a band). When banknote bundles are to be dispensed, the banknote bundles are discharged from a banknote bundle outlet located in an upper portion of the front surface of a housing of the unit. When a large quantity of banknote bundles are to be dispensed or collected from the banknote bundle handling unit 200, these banknote bundles can be discharged to the outside of the unit from a banknote bundle ejection port located in a lower portion of the front surface of the housing.

The loose coin handling unit 300 can store loose coins for each denomination. Loose coins can be deposited by putting these coins into a loose coin inlet located in the upper surface of a housing of the unit, and loose coins can be dispensed from a loose coin outlet located in the front surface of the housing. In the depositing process, rejected coins are sent to a deposit-reject port. The loose coin handling unit 300 includes a bag collecting chute. The bag collecting chute is formed such that a coin bag can be attached thereto and loose coins can be collected in the coin bag. The loose coin handling unit 300 includes a return collection box for discharging loose coins which have been deposited for the depositing process, when the depositing process is cancelled in the middle of the process.

The wrapped coin handling unit 400 stores therein wrapped coins for each denomination. The wrapped coin handling unit 400 has a wrapped coin outlet located in an upper portion of the front surface of a housing thereof. The wrapped coins can be taken out from the wrapped coin outlet. A wrapped coin collection box and a wrapped coin ejection port are disposed below the wrapped coin outlet. The wrapped coin collection box is used for collectively collecting a large quantity of wrapped coins. The wrapped coin ejection port is used for ejecting a large quantity of wrapped coins to the outside of the unit.

The unfit coin handling unit 500 has an unfit coin inlet, a circulating coin storage unit, a commemorative coin storage unit, and a return coin storage unit. The unfit coin inlet is used for receiving coins, which cannot be accepted by the loose coin handling unit 300 and the wrapped coin handling unit 400, such as unfit coins and commemorative coins. The circulating coin storage unit and a commemorative coin storage unit are used for sorting and storing coins received in the unfit coin inlet. The return coin storage unit is used for storing coins to be returned. Unfit circulating coins are stored in the circulating coin storage unit. Fit commemorative coins and unfit commemorative coins are stored in the commemorative coin storage unit.

The unfit note handling unit 600 has a sheet inlet, a sheet outlet, and a post box. The sheet inlet is used for receiving sheets, which cannot be accepted by the loose note handling unit 100 and the banknote bundle handling unit 200, such as unfit notes, checks, and bills. The sheet outlet is used for discharging sheets such as unfit notes. The post box is used for receiving and storing unfit notes and the like. The sheet inlet is located at a front portion of the upper surface of a housing of the unit The sheet outlet and the post box are located at the front surface of the housing.

### <Control configuration of money handling apparatus 1>

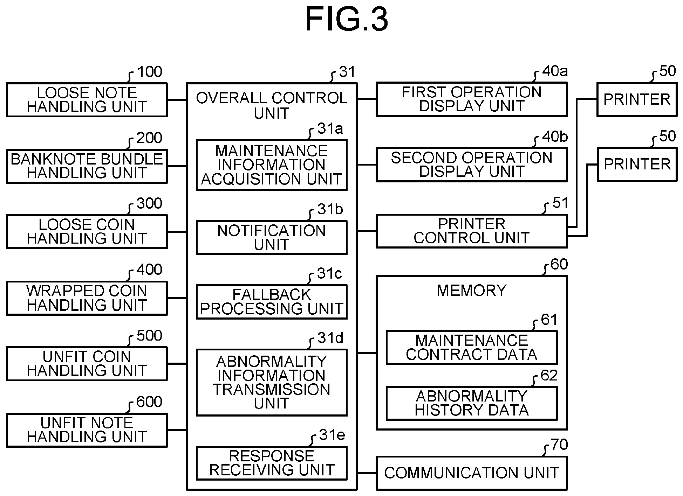

The control configuration of the money handling apparatus 1 shown in FIG. 2 will be described. FIG. 3 is a functional block diagram showing the control configuration of the money handling apparatus 1 shown in FIG. 2. As shown in FIG. 3, an overall control unit 31 of the money handling apparatus 1 is connected to the loose note handling unit 100, the banknote bundle handling unit 200, the loose coin handling unit 300, the wrapped coin handling unit 400, the unfit coin handling unit 500, the unfit note handling unit 600, the first operation display unit 40a, the second operation display unit 40b, a printer control unit 51, a memory 60, and a communication unit 70. The description of the components that have already been described is omitted in the following description.

The printer control unit 51 controls printing of the printers 50 which are disposed corresponding to the operation display units 40a and 40b, respectively. The memory 60 is a storage device that stores various programs and data. The memory 60 includes a ROM (Read Only Memory), a RAM (Random Access Memory), a non-volatile memory, a hard disk, or the like. Maintenance contract data 61 and abnormality history data 62, which will be described later, are stored in the memory 60. The communication unit 70 is an interface unit that communicates with external devices such as mobile phones, smartphones, tablet terminals, management devices, etc.

The maintenance contract data 61 stored in the memory 60 is data related to maintenance service contracts. By referring to the maintenance contract data 61, it can be confirmed whether or not there is a valid maintenance service contract for the money handling apparatus 1. The abnormality history data 62 is log data indicating the history of abnormalities that have occurred in the money handling apparatus 1.

The overall control unit 31 controls each unit (the loose note handling unit 100, the banknote bundle handling unit 200, the loose coin handling unit 300, the wrapped coin handling unit 400, the unfit coin handling unit 500, the unfit note handling unit 600). The overall control unit 31 includes a maintenance information acquisition unit 31a, a notification unit 31b, a fallback processing unit 31c, an abnormality information transmission unit 31d, and a response receiving unit 31e, which are processing units that perform characteristic processing in the present embodiment.

The maintenance information acquisition unit 31a acquires information related to the maintenance service for the money handling apparatus 1. Specifically, the maintenance information acquisition unit 31a acquires the information related to the maintenance service by retrieving the maintenance contract data 61 from the memory 60.

The information related to the maintenance service includes information about whether or not the maintenance service is subscribed to, information about the applicable range of the maintenance service, and information about a contract period of the maintenance service. The information related to the maintenance service can be used to confirm whether or not there is a valid contract for the money handling apparatus 1 to receive the maintenance service. The applicable range is defined, for example, by a time period for receiving the maintenance service (24-hour support, only from 8:00 to 17:00, etc.), a target apparatus covered by the maintenance service (a money handling machine is covered, while others are not covered, etc.), exemption from obligation (maintenance due to disasters such as natural disasters is not covered, etc.). The contract period of the maintenance service is defined by a period from the introduction date of the maintenance service, or the end date of the period.

The present embodiment describes an example in which the maintenance information acquisition unit 31a retrieves the maintenance contract data 61 from the memory 60, but the information related to the maintenance service can be acquired by any method such as acquiring from a predetermined system via a network.

The notification unit 31b notifies of the information acquired by the maintenance information acquisition unit 31a. Specifically, the notification unit 31b notifies of the information acquired by the maintenance information acquisition unit 31a when the money handling apparatus 1 has come into an abnormal state. The notification can be performed by various method. For example, the notification is performed by display output by the first operation display unit 40a or the second operation display unit 40b, audio output by a speaker, print output by a printer, etc. In addition to the notification unit 31b, a notification processing unit that performs control such that the information acquired by the maintenance information acquisition unit 31a is notified by the notification unit 31b may be further included in the money handling apparatus 1. Alternatively, the notification unit 31b may be provided with a notification processing unit, that is, the notification unit 31b may include a function as a notification processing unit.

Examples of abnormal states of the money handling apparatus 1 include jamming of money, sensor abnormalities, damage to apparatus members, miscalculation, etc. Miscalculation indicates a state where the inventory amount of money on data and the inventory amount of money actually stored in the money handling apparatus 1 do not match. Miscalculation can be detected by performing a reconciliation process in which the valuable media in the money handling apparatus are counted. The reconciliation process may include at least one process out of denomination recognition process and authenticity recognition process.

The notification by the notification unit 31b can be performed at any timing by any method. For example, when the first operation display unit 40a or the second operation display unit 40b is operated by an operator, the notification unit 31b performs display output on the operated operation display unit, thereby allowing the operator to reliably recognize the notification content. The notification unit 31b may perform notification when a specific operation is performed by the operator. For example, the notification is performed when the operator performs an operation for selecting a display of a setting screen or an apparatus status screen.

The notification unit 31b can perform various notifications based on the information acquired by the maintenance information acquisition unit 31a. Specifically, if there is a valid contract for the maintenance service, the notification unit 31b notifies that restoration will be performed by a maintenance person. The notification unit 31b can also notify that the maintenance person is in the middle of handling of the abnormality, the maintenance person is on the way to the site, etc. When a server or the like is the cause of an abnormality of the apparatus, the notification unit 31b can also notify that the maintenance person is in the middle of eliminating the cause of the abnormality.

When the money handling apparatus 1 has come into an abnormal state and the maintenance service contract is valid, the fallback processing unit 31c makes the money handling apparatus 1 operate in a fallback state where a part of the functions related to the abnormal state of the money handling apparatus 1 is restricted. Specifically, when an abnormality such as miscalculation or jamming has occurred, the fallback processing unit 31c restricts at least the movement of money which may cause miscalculation or jamming. More preferably, in the fallback operation, the fallback processing unit 31c restricts the operation on a unit basis. For example, when jamming occurs during transport of loose banknotes, the fallback processing unit 31c performs a fallback operation in which the operation of the loose banknote handling unit 100 is stopped while operations of the other units are continued.

The fallback processing unit 31c restricts the operations by the operator based on the restricted functions. For example, when the operation of the loose note handling unit 100 is stopped, the fallback processing unit 31c shows grayed out operation menus of the banknote depositing process, the banknote dispensing process, etc., on the first operation display unit 40a and the second operation display unit 40b such that the operator cannot select these operation menus for the loose note handling unit 100.

When the functions of the apparatus and the operations of the operators are restricted by the fallback processing unit 31c, operations for recovering from abnormalities such as opening the door of the unit can also be restricted. Therefore, it can be avoided that the operator tries to restore the money handling apparatus 1 and the abnormal state becomes much worse.

When the money handling apparatus 1 has come into an abnormal state, the abnormality information transmission unit 31d outputs information related to the abnormal state to an external terminal. The information related to the abnormal state includes at least one of location information (address, bank name, branch name, etc.) of the money handling apparatus 1 that has come into the abnormal state, the type information of the abnormal state, the date and time when the money handling apparatus 1 came into the abnormal state, and history information on a state of the money handling apparatus 1 in the abnormal state. Specifically, the abnormality information transmission unit 31d retrieves the abnormality history data 62 and transmits the abnormality history data 62 to an external terminal. The external terminal may be the maintenance center server 80, a terminal carried by the maintenance person, a server of the manufacturer of the money handling apparatus 1, or the like.

The response receiving unit 31e receives a response to the information transmitted by the abnormality information transmission unit 31d, from the external terminal. For example, when the abnormality information transmission unit 31d notifies the maintenance center server 80 of an abnormality, the maintenance center server 80 performs processes for dispatching a maintenance person and transmitting a response to the money handling apparatus 1. The response receiving unit 31e receives this response. When the response receiving unit 31e receives the response, the notification unit 31b can notify that handling by the maintenance person has been started. The notification unit 31b may also notify of the estimated time until the maintenance person arrives there, the estimated time until the abnormal state is eliminated, etc.

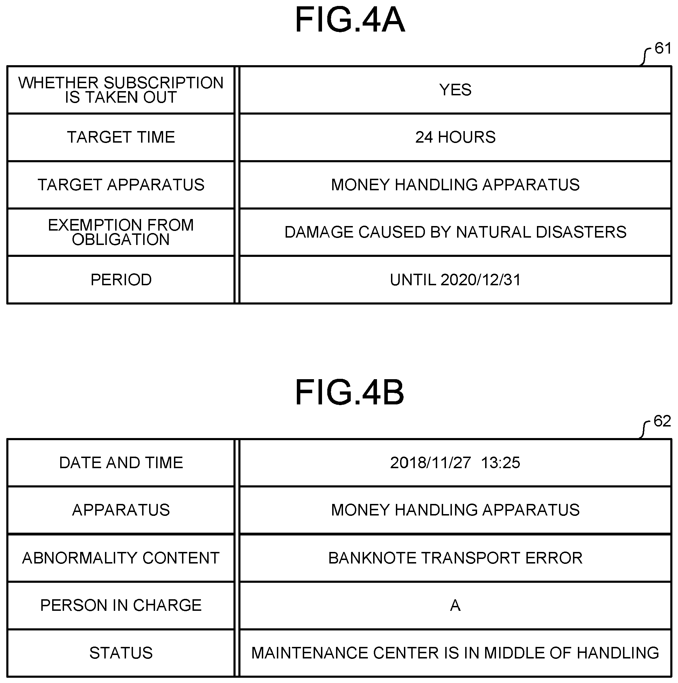

FIGS. 4A and 4B show examples of data stored in the memory 60 shown in FIG. 3. As shown in FIG. 4A, the maintenance contract data 61 includes items such as whether or not a maintenance service contract is subscribed to, a target time, a target apparatus, exemption from obligation, and a period. In FIG. 4A shows an example for each item of the maintenance contract data 61. FIG. 4A shows that the subscription is "Yes", the target time is "24 hours", the target apparatus is "money handling apparatus", the exemption from obligation is "damage caused by natural disasters", and the period is "until 2020/12/31".

As shown in FIG. 4B, the abnormality history data 62 includes items such as the date and time when the abnormality occurred, the apparatus in which the abnormality occurred, the abnormality content, a person in charge, and a status. FIG. 4B shows an example for each item of the abnormality history data 62. FIG. 4B shows that the date and time are "2018/11/27 13:25", the apparatus is "money handling apparatus", the abnormality content is "banknote transport error", the person in charge is "A", and the status is "maintenance center is in middle of handling". Although one abnormality is shown here, the abnormality history data 62 is generated and managed for each abnormality that occurs in the apparatus.

### <Processing by money handling apparatus>

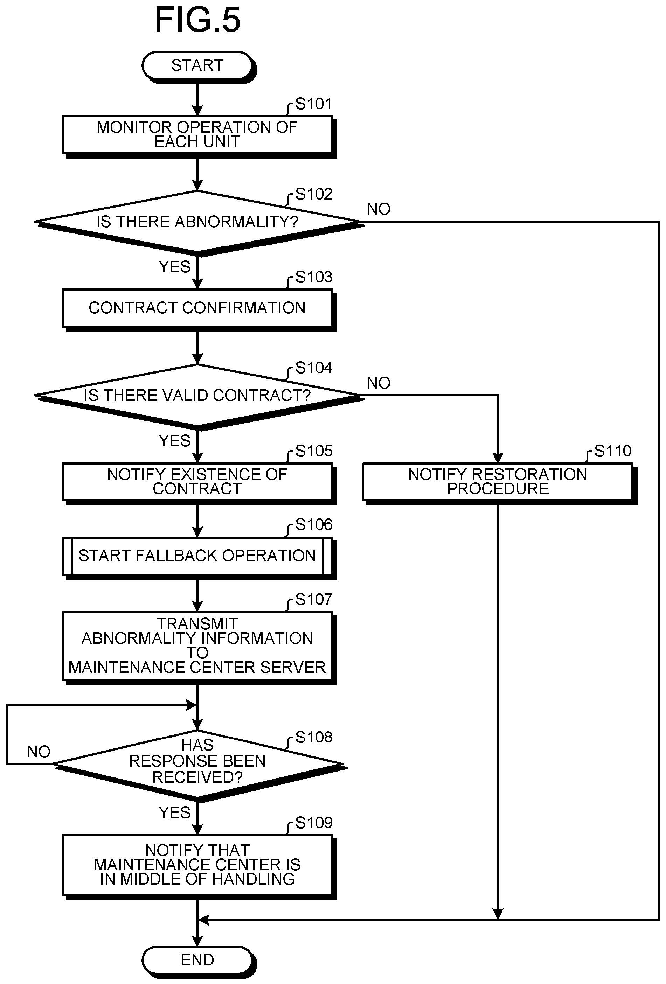

Next, processing by the money handling apparatus 1 will be described. FIG. 5 is a flowchart showing a procedure of processing by the money handling apparatus 1. The overall control unit 31 monitors the operation of each unit (step S101) and determines the presence/absence of an abnormal state (step S102). As a result of the determination, if there is no abnormality (step S102; No), the processing ends. On the other hand, if there is an abnormality (step S102; Yes), the maintenance information acquisition unit 31a retrieves the maintenance contract data 61 in the memory 60 and confirms whether or not a valid contract exists for the money handling apparatus 1 (step S103).

If there is no valid contract (step S104; No), the notification unit 31b notifies the operator of a restoration procedure for eliminating the abnormality (step S110), and the processing ends. On the other hand, if a valid contract exists (step S104; Yes), the notification unit 31b notifies the user of the existence of the contract (step S105). The fallback processing unit 31c starts the fallback operation (step S106). The abnormality information transmission unit 31d transmits information related to the abnormality state to the maintenance center server 80 (step S107).

After step S107, the response receiving unit 31e determines whether or not a response has been received from the maintenance center server 80 (step S108). If the response receiving unit 31e has not received a response from the maintenance center server 80 (step S108; No), the response receiving unit 31e repeats step S108 to wait for a response. If the response receiving unit 31e has received a response from the maintenance center server 80 (step S108; Yes), the notification unit 31b notifies that the maintenance center is in the middle of handling of the abnormality (step S109), and the processing ends.

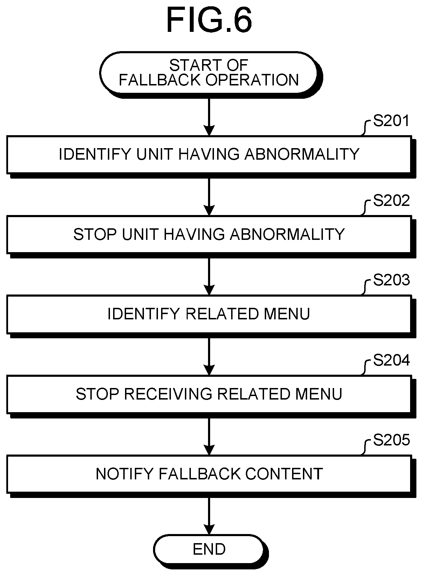

FIG. 6 is a flowchart showing a procedure of processing performed by starting the fallback operation shown in FIG. 5. As shown in FIG. 6, first, the fallback processing unit 31c identifies the unit in which the abnormality has occurred (step S201), and stops the operation of the unit in which the abnormality has occurred (step S202). Next, the fallback processing unit 31c identifies the operation menu related to the abnormality as a related menu (step S203), and stops receiving operations for the related menu (step S204). Thereafter, the notification unit 31b notifies the operator of the content of the fallback operation (step S205), and the processing returns to step S107 shown in FIG. 5

Next, the operation of the abnormality information transmission unit 31d will be described. The abnormality information transmission unit 31d transmits the abnormality history data 62 to the maintenance center server 80. The abnormality information transmission data 62 includes confidential information that should be kept secret in the financial institution. For example, information registered in the item of the person in charge in the abnormality history data 62 should be confidential information.

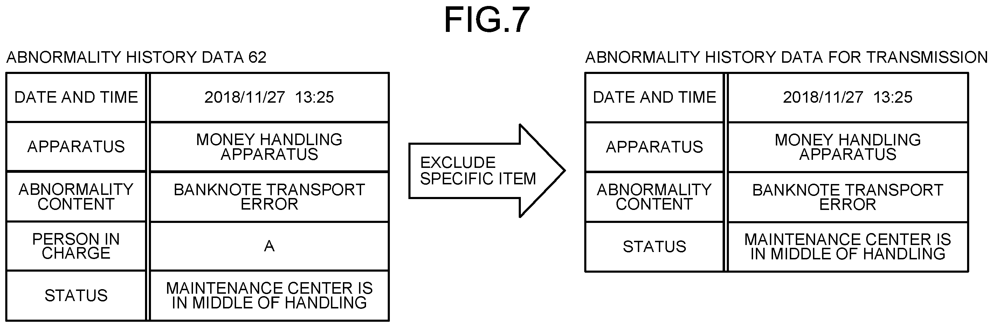

Therefore, the abnormality information transmission unit 31d excludes the confidential information from the abnormality history data 62 and then transmits the abnormality history data 62, which does not include the confidential information, to the maintenance center server 80. FIG. 7 illustrates exclusion of confidential information. In the example shown in FIG. 7, the item of the person in charge is excluded from the items included in the abnormality history data 62. Therefore, the transmission abnormality history data transmitted to the maintenance center server 80 includes the items of the date and time, the apparatus, the abnormality content, and the status, but does not include the item of the person in charge.

FIG. 7 shows an example, in which the item of the person in charge is excluded, as a specific item, from the abnormality history data 62. When the data including confidential information is to be transmitted to the outside, a process for excluding a specific item can be widely applicable to other items. For example, it is possible to exclude an account number, etc., as specific items.

The specific item can be set by specifying the attribute of an item as described above, or can be set by specifying a data format. For example, it is possible to set an item which has a numerical data format having a predetermined number of digits enclosed in angle brackets "<>", as a specific item. For another example, it is also possible to set a specific item through analysis of data regularity or the like.

Although FIG. 7 shows an example in which the item itself is deleted, it is possible to conceal the information registered in a specific item by keeping the specific item and changing the information registered in the specific item to blank.

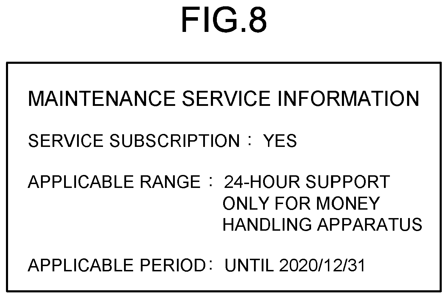

FIG. 8 shows a specific example of a notification screen displayed on the first operation display unit 40a or the second operation display unit 40b by the notification unit 31b. In FIG. 8, messages "maintenance service information", "service subscription: yes", "applicable range: 24-hour support only for money handling apparatus", and "applicable period: until 2020/12/31" are displayed.

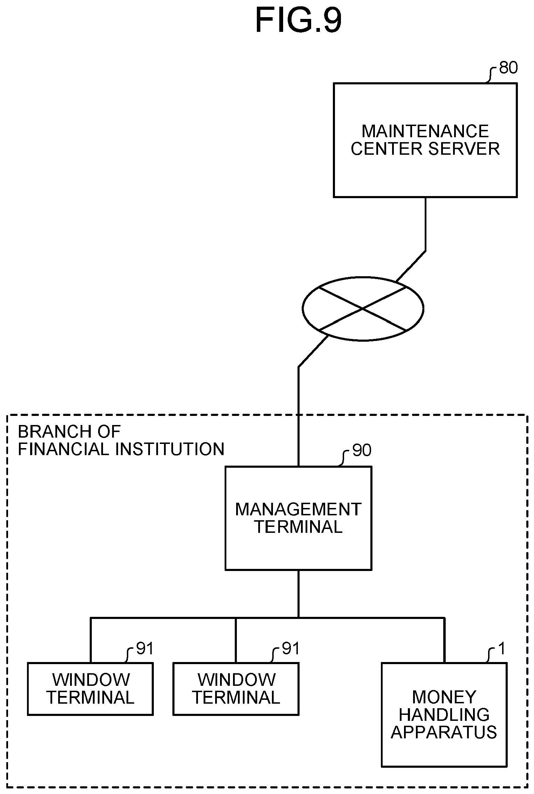

A modification of the network configuration will be described. FIG. 9 illustrates the modified example of the network configuration. In the configuration shown in FIG. 9, a management terminal 90 is disposed at a branch of a financial institution. The management terminal 90 manages communication with external terminals, which are disposed outside the branch, such as the maintenance center server 80. The money handling apparatus 1, a plurality of window terminals 91, etc., are connected to the management terminal 90.

In such a configuration, the money handling apparatus 1 notifies the maintenance center server 80 of an abnormality via the management terminal 90 and receives a response from the maintenance center server 80 via the management terminal 90, and operations related to the maintenance service can be performed in the same manner as described above.

Moreover, in such a configuration, it is also possible to cause the management terminal 90 to perform a part of the above-described functions of the money handling apparatus 1. For example, the management terminal 90 may perform the notification related to the maintenance service and the notification related to an abnormality. The management terminal 90 may perform the process for excluding information registered for a specific item from the abnormality history data 62. It is also possible to perform the notification by displaying the related information on a portable terminal device (tablet, smartphone, etc.) used by the operator.

As described above, in the present embodiment, the money handling apparatus 1, which is a valuable medium handling apparatus for handling valuable media, is configured to include the maintenance information acquisition unit 31a for acquiring information related to the maintenance service, and the notification unit 31b for notifying of the acquired information. Accordingly, a technology for more efficiently eliminating an abnormal state of the valuable medium handling apparatus can be provided.

Specifically, the maintenance information acquisition unit 31a acquires at least information indicating whether or not there is a valid contract for receiving the maintenance service.

When the money handling apparatus 1 has come into an abnormal state, the notification unit 31b notifies that the money handling apparatus 1 is in the abnormal state. For example, when the reconciliation process, in which the valuable media are counted in the money handling apparatus 1, is performed and a miscalculation state is detected, the notification unit 31b notifies that the money handling apparatus 1 is in the miscalculation state. The notification unit 31b can perform the notification when a predetermined operation is performed by using the operation unit.

The money handling apparatus 1 can output information related to an abnormal state to an external terminal. The information related to the abnormal state can include at least one of the location information of the money handling apparatus 1 that has come into the abnormal state, the type information of the abnormal state, the date and time when the money handling apparatus 1 came into the abnormal state, and the history information on a state of the money handling apparatus 1 in the abnormal state.

The money handling apparatus 1 can notify that the maintenance person is in the middle of handling of the abnormality, based on the response received from the external terminal.

The money handling apparatus 1 includes the fallback processing unit 31c. When the money handling apparatus 1 comes into an abnormal state and the maintenance service contract is valid, the fallback processing unit 31c makes the money handling apparatus 1 operate in a fallback state where a part of the functions related to the abnormality is restricted. The fallback processing unit 31c can restrict the receiving of operations from the operator according to the restriction on the functions of the money handling apparatus 1. The fallback processing unit 31c can also restrict the movement of money which may cause the abnormality. Furthermore, the fallback processing unit 31c can stop the operation of at least one of the plurality of units.

In the above embodiment, information on the abnormal state of the money handling apparatus 1 is shared by the branch where the money handling apparatus 1 is installed and the maintenance center, but the information may be shared with the headquarters of the financial institution that controls this branch. Specifically, an information display server linked to the maintenance center server is provided at the headquarters of the financial institution such that the equipment usage status of the branch can be viewed on the Web by using the information display server. Examples of the information that can be viewed by the information display server include the presence/absence of miscalculation as a result of the reconciliation process, the power activation state of the money handling apparatus, and whether or not a process for clearing data has been performed. Accordingly, the headquarters of the financial institution can perform processes needed for abnormalities in the money handling apparatus.

In the above embodiment, the description has been given with the money handling apparatus 1 installed at the branch of the financial institution as an example. However, the present invention is not limited thereto, and is applicable to any apparatus that handles valuable media, such as a money counter.

The illustrated components are conceptually functional constituent elements, and thus may not necessarily be configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

### INDUSTRIAL APPLICABILITY

As described above, the valuable medium handling apparatus, the valuable medium handling system, and the valuable medium handling method are suitable for more efficiently eliminating the abnormal state of the valuable medium handling apparatus.

### DESCRIPTION OF THE REFERENCE CHARACTERS

- 1: Money handling apparatus
- 31: Overall control unit
- 31a: Maintenance information acquisition unit
- 31b: Notification unit
- 31c: Fallback processing unit
- 31d: Abnormality information transmission unit
- 31e: Response receiving unit
- 40a, 40b: Operation display unit
- 50: Printer
- 51: Printer control unit
- 60: Memory
- 61: Maintenance contract data
- 62: Abnormality history data
- 70: Communication unit
- 80: Maintenance center server
- 90: Management terminal
- 91: Window terminal
- 100: Loose note handling unit
- 200: Banknote bundle handling unit
- 300: Loose coin handling unit
- 400: Wrapped coin handling unit
- 500: Unfit coin handling unit
- 600: Unfit note handling unit

## Claims

1. A valuable medium handling apparatus (1) for handling valuable media, comprising:
a maintenance information acquisition unit (31a) configured to acquire information on a contract for a maintenance service for the valuable medium handling apparatus (1);
a notification unit (31b) configured to notify an operator of the information acquired by the maintenance information acquisition unit (31a), and
a communication unit (70) configured to output information related to the abnormal state, to a maintenance center server (80),
wherein when the valuable medium handling apparatus (1) comes into an abnormal state and there is no valid contract, the notification unit (31b) notifies the operator of a restoration procedure for eliminating the abnormality,
and when the valuable medium handling apparatus (1) comes into an abnormal state and the contract for the maintenance service is valid,
a fallback processing unit (31c) makes the valuable medium handling apparatus (1) operate in a fallback state in which a part of functions of the valuable medium handling apparatus (1) is restricted,
and wherein operations for recovering from abnormalities including opening a door of the valuable medium handling apparatus is also restricted,
and wherein the communication unit (70) outputs the information related to the abnormal state to the maintenance center server (80) to handle the abnormality.

2. The valuable medium handling apparatus (1) according to claim 1, wherein, when the valuable medium handling apparatus (1) comes into the abnormal state, the notification unit (31b) is configured to perform the notification.

3. The valuable medium handling apparatus (1) according to claim 2, wherein
the valuable medium handling apparatus (1) is configured to store valuable media therein, and
when the valuable medium handling apparatus (1) comes into a miscalculation state, the notification unit (31b) is configured to perform the notification.

4. The valuable medium handling apparatus (1) according to claim 3 wherein
the valuable medium handling apparatus (1) is configured to perform a reconciliation process to count the valuable media in the valuable medium handling apparatus (1), and
the miscalculation state is detected through the reconciliation process.

5. The valuable medium handling apparatus (1) according to claim 1, further comprising
an operation unit (40a, 40b),
wherein when a predetermined operation is performed on the operation unit (40a, 40b), the notification unit (31b) is configured to perform the notification.

6. The valuable medium handling apparatus (1) according to any one of claims 1 to 3 wherein the communication unit is configured to output the information related to the abnormal state including at least one of information on a location of the valuable medium handling apparatus (1) that comes into the abnormal state, information on a type of the abnormal state, date and time when the valuable medium handling apparatus (1) comes into the abnormal state, and information on a state history of the valuable medium handling apparatus (1) that comes into the abnormal state.

7. The valuable medium handling apparatus (1) according to claim 6 further comprising
a receiving unit (31e) configured to receive a response to the information outputted from the communication unit (70), from the external terminal,
wherein the notification unit (31b) is configured to notify that a maintenance person is in the middle of handling, based on the response received by the receiving unit (31e).

8. The valuable medium handling apparatus (1) according to any one of claims 1 to 7 wherein the fallback processing unit (31c) is configured to restrict an operation by the operator according to the restriction on the functions.

9. The valuable medium handling apparatus (1) according to any one of claims 1 to 8 wherein the fallback processing unit (31c) is configured to restrict movement of valuable medium which may cause the abnormal state.

10. The valuable medium handling apparatus (1) according to any one of claims 1 to 9 wherein
the valuable medium handling apparatus (1) includes a plurality of units (100 to 600), and
the fallback processing unit (31c) is configured to stop operation of at least one of the plurality of units (100 to 600).

11. A valuable medium handling method performed by a valuable medium handling apparatus (1) according to any one of claims 1 to 10 for handling valuable media, the valuable medium handling method comprising:
acquiring information on a contract for a maintenance service for the valuable medium handling apparatus (1);
notifying an operator of the information on the contract for the maintenance service; and
outputting information related to the abnormal state, to a maintenance center server,
and notifying the operator of a restoration procedure for eliminating the abnormality when the valuable medium handling apparatus (1) comes into an abnormal state and there is no valid contract,
and making, when the valuable medium handling apparatus (1) comes into an abnormal state and the contract for the maintenance service is valid, the valuable medium handling apparatus (1) operate in a fallback state in which a part of functions of the valuable medium handling apparatus (1) is restricted, wherein operations for recovering from abnormalities including opening a door of the valuable medium handling apparatus is also restricted and wherein the communication unit outputs the information related to the abnormal state to the maintenance center server to handle the abnormality.

## Patentansprüche

1. Eine Vorrichtung (1) zur Handhabung wertvoller Medien, die Folgendes umfasst:
eine Einheit (31a) zur Erfassung von Wartungsinformationen, die dazu eingerichtet ist, Informationen über einen Vertrag für einen Wartungsdienst für die Vorrichtung (1) zur Handhabung wertvoller Medien zu erfassen;
eine Benachrichtigungseinheit (31b), die dazu eingerichtet ist, einen Bediener über die von der Einheit (31a) zur Erfassung von Wartungsinformationen erfassten Informationen zu benachrichtigen, und
eine Kommunikationseinheit (70), die dazu eingerichtet ist, Informationen über den abnormalen Zustand an einen Wartungsserver (80) auszugeben,
wobei, wenn die Vorrichtung (1) zur Handhabung wertvoller Medien in einen abnormalen Zustand gerät und kein gültiger Vertrag vorliegt, die Benachrichtigungseinheit (31b) den Bediener über ein Wiederherstellungsverfahren zur Beseitigung der Anomalie benachrichtigt,
und wenn die Vorrichtung (1) zur Handhabung wertvoller Medien in einen abnormalen Zustand gerät und der Vertrag für den Wartungsdienst gültig ist, veranlasst eine Fallback-Verarbeitungseinheit (31c), dass die Vorrichtung (1) zur Handhabung wertvoller Medien in einem Fallback-Zustand arbeitet, in dem ein Teil der Funktionen der Vorrichtung (1) zur Handhabung wertvoller Medien eingeschränkt ist,
und wobei auch Vorgänge zur Beseitigung von Anomalien, einschließlich des Öffnens einer Tür der Vorrichtung zur Handhabung wertvoller Medien, eingeschränkt sind,
und wobei die Kommunikationseinheit (70) die Informationen bezüglich des abnormalen Zustands an den Wartungszentrumsserver (80) ausgibt, um die Anomalie zu beheben.

2. Die Vorrichtung (1) zur Handhabung wertvoller Medien gemäß Anspruch 1, wobei die Benachrichtigungseinheit (31b) dazu eingerichtet ist, die Benachrichtigung durchzuführen, wenn die Vorrichtung (1) zur Handhabung wertvoller Medien in den abnormalen Zustand gerät.

3. Die Vorrichtung (1) zur Handhabung wertvoller Medien gemäß Anspruch 2, wobei
die Vorrichtung (1) zur Handhabung wertvoller Medien dazu eingerichtet ist, wertvolle Medien darin zu speichern, und
wenn die Vorrichtung (1) zur Handhabung wertvoller Medien in einen Fehlberechnungszustand gerät, die Benachrichtigungseinheit (31b) dazu eingerichtet ist, die Benachrichtigung durchzuführen.

4. Die Vorrichtung (1) zur Handhabung wertvoller Medien gemäß Anspruch 3, wobei
die Vorrichtung (1) zur Handhabung wertvoller Medien dazu eingerichtet ist, einen Abgleichprozess durchzuführen, um die wertvollen Medien in der Vorrichtung (1) zur Handhabung wertvoller Medien zu zählen, und
der Fehlerberechnungszustand durch den Abgleichprozess erkannt wird.

5. Die Vorrichtung (1) zur Handhabung wertvoller Medien gemäß Anspruch 1, die ferner umfasst
eine Bedieneinheit (40a, 40b),
wobei die Benachrichtigungseinheit (31b) dazu eingerichtet ist, die Benachrichtigung auszuführen, wenn eine vorbestimmte Bedienung an der Bedieneinheit (40a, 40b) durchgeführt wird.

6. Die Vorrichtung (1) zur Handhabung wertvoller Medien gemäß einem der Ansprüche 1 bis 3, wobei die Kommunikationseinheit dazu eingerichtet ist, die Informationen bezüglich des abnormalen Zustands auszugeben, einschließlich mindestens einer der folgenden Informationen: Informationen über einen Standort der Vorrichtung (1) zur Handhabung wertvoller Medien, die in den abnormalen Zustand gerät, Informationen über eine Art des abnormalen Zustands, Datum und Uhrzeit, zu denen die Vorrichtung (1) zur Handhabung wertvoller Medien in den abnormalen Zustand gelangt ist, und Informationen über einen Zustandsverlauf der Vorrichtung (1) zur Handhabung wertvoller Medien, die in den abnormalen Zustand gelangt ist, auszugeben.

7. Die Vorrichtung (1) zur Handhabung wertvoller Medien gemäß Anspruch 6, die ferner umfasst
eine Empfangseinheit (31e), die dazu eingerichtet ist, eine Antwort auf die von der Kommunikationseinheit (70) ausgegebenen Informationen vom externen Terminal zu empfangen,
wobei die Benachrichtigungseinheit (31b) dazu eingerichtet ist, auf der Grundlage der von der Empfangseinheit (31e) empfangenen Antwort zu benachrichtigen, dass ein Wartungstechniker gerade mit der Bearbeitung beschäftigt ist.

8. Die Vorrichtung (1) zur Handhabung wertvoller Medien gemäß einem der Ansprüche 1 bis 7, wobei die Fallback-Verarbeitungseinheit (31c) dazu eingerichtet ist, einen Vorgang durch den Bediener entsprechend der Einschränkung der Funktionen einzuschränken.

9. Die Vorrichtung (1) zur Handhabung wertvoller Medien gemäß einem der Ansprüche 1 bis 8, wobei die Fallback-Verarbeitungseinheit (31c) dazu eingerichtet ist, die Bewegung wertvoller Medien einzuschränken, die den abnormalen Zustand verursachen kann.

10. Die Vorrichtung (1) zur Handhabung wertvoller Medien gemäß einem der Ansprüche 1 bis 9, wobei
die Vorrichtung (1) zur Handhabung wertvoller Medien mehrere Einheiten (100 bis 600) umfasst und
die Fallback-Verarbeitungseinheit (31c) dazu eingerichtet ist, den Betrieb mindestens einer der mehreren Einheiten (100 bis 600) zu stoppen.

11. Verfahren zur Handhabung wertvoller Medien, das von einer Vorrichtung zur Handhabung wertvoller Medien (1) zur Handhabung wertvoller Medien gemäß einem der Ansprüche 1 bis 10 durchgeführt wird, wobei das Verfahren zur Handhabung wertvoller Medien umfasst:
das Erfassen von Informationen über einen Vertrag für einen Wartungsdienst für die Vorrichtung zur Handhabung wertvoller Medien (1);
das Benachrichtigen eines Bedieners über die Informationen über den Vertrag für den Wartungsdienst; und
das Ausgeben von Informationen über den abnormalen Zustand an einen Wartungszentrumsserver,
und das Benachrichtigen des Bedieners über ein Wiederherstellungsverfahren zum Beseitigen der Anomalie, wenn die Vorrichtung (1) zur Handhabung wertvoller Medien in einen abnormalen Zustand gerät und kein gültiger Vertrag vorliegt, und
das Veranlassen, dass die Vorrichtung (1) zur Handhabung wertvoller Medien, wenn sie in einen abnormalen Zustand gerät und der Vertrag für den Wartungsdienst gültig ist, die Vorrichtung (1) zur Handhabung wertvoller Medien in einem Fallback-Zustand betrieben wird, in dem ein Teil der Funktionen der Vorrichtung (1) zur Handhabung wertvoller Medien eingeschränkt ist, wobei auch Vorgänge zur Behebung von Anomalien, einschließlich des Öffnens einer Tür der Vorrichtung zur Handhabung wertvoller Medien, eingeschränkt sind und wobei die Kommunikationseinheit die Informationen bezüglich des abnormalen Zustands an den Wartungszentrumsserver ausgibt, um die Anomalie zu beheben.

## Revendications

1. Appareil de manipulation de supports de valeur (1) destiné à manipuler des supports de valeur, comprenant :
une unité d'acquisition d'informations de maintenance (31a) conçue pour acquérir des informations sur un contrat de service de maintenance relatif à l'appareil de manipulation de supports de valeur (1),
une unité de notification (31b) conçue pour notifier à un opérateur les informations acquises par l'unité d'acquisition d'informations de maintenance (31a), et
une unité de communication (70) conçue pour transmettre des informations relatives à l'état anormal à un serveur de centre de maintenance (80) ;
étant entendu que, lorsque l'appareil de manipulation de supports de valeur (1) se trouve dans un état anormal et qu'il n'existe aucun contrat en cours de validité, l'unité de notification (31b) notifie à l'opérateur une procédure de rétablissement pour éliminer l'anomalie,
et lorsque l'appareil de manipulation de supports de valeur (1) se trouve dans un état anormal et que le contrat de service de maintenance est en cours de validité, une unité de traitement de secours (31c) amène l'appareil de manipulation de supports de valeur (1) à fonctionner dans un état de secours dans lequel une partie des fonctions de l'appareil de manipulation de supports de valeur (1) sont limitées ;
des opérations de reprise après anomalie, dont l'ouverture d'une porte de l'appareil de manipulation de supports de valeur, étant également limitées,
et l'unité de communication (70) transmettant les informations relatives à l'état anormal au serveur du centre de maintenance (80) afin de traiter l'anomalie.

2. Appareil de manipulation de supports de valeur (1) selon la revendication 1, dans lequel, lorsque l'appareil de manipulation de supports de valeur (1) se trouve dans un état anormal, l'unité de notification (31b) est conçue pour envoyer la notification.

3. Appareil de manipulation de supports de valeur (1) selon la revendication 2, dans lequel
l'appareil de manipulation de supports de valeur (1) est conçu pour un stockage de supports de valeur à l'intérieur de celui-ci, et
lorsque l'appareil de manipulation de supports de valeur (1) se trouve dans un état d'erreur de calcul, l'unité de notification (31b) est conçue pour envoyer la notification.

4. Appareil de manipulation de supports de valeur (1) selon la revendication 3, dans lequel
l'appareil de manipulation de supports de valeur (1) est conçu pour réaliser un processus de rapprochement afin de compter les supports de valeur présents dans l'appareil de manipulation de supports de valeur (1), et
l'état d'erreur de calcul est détecté en conséquence du processus de rapprochement.

5. Appareil de manipulation de supports de valeur (1) selon la revendication 1, comprenant en outre
une unité d'exploitation (40a, 40b) ;
lorsqu'une opération prédéterminée est réalisée sur l'unité d'exploitation (40a, 40b), l'unité de notification (31b) est conçue pour envoyer la notification.

6. Appareil de manipulation de supports de valeur (1) selon l'une quelconque des revendications 1 à 3, dans lequel l'unité de communication est conçue pour transmettre les informations relatives à l'état anormal, dont au moins un des types d'informations suivants : informations sur l'emplacement de l'appareil de manipulation de supports de valeur (1) dans l'état anormal, informations sur le type d'état anormal, date et heure auxquelles l'appareil de manipulation de supports de valeur (1) s'est trouvé dans l'état anormal, et informations sur l'historique d'état de l'appareil de manipulation de supports de valeur (1) dans l'état anormal.

7. Appareil de manipulation de supports de valeur (1) selon la revendication 6, comprenant en outre
une unité de réception (31e) conçue pour recevoir une réponse aux informations transmises par l'unité de communication (70), en provenance du terminal externe ;
l'unité de notification (31b) étant conçue pour notifier qu'un technicien de maintenance est en cours d'intervention, en fonction de la réponse reçue par l'unité de réception (31e).

8. Appareil de manipulation de supports de valeur (1) selon l'une quelconque des revendications 1 à 7, dans lequel l'unité de traitement de secours (31c) est conçue pour limiter une opération réalisée par l'opérateur en fonction de la limitation des fonctions.

9. Appareil de manipulation de supports de valeur (1) selon l'une quelconque des revendications 1 à 8, dans lequel l'unité de traitement de secours (31c) est conçue pour limiter un déplacement du support de valeur susceptible de provoquer l'état anormal.

10. Appareil de manipulation de supports de valeur (1) selon l'une quelconque des revendications 1 à 9, dans lequel
l'appareil de manipulation de supports de valeur (1) comprend une pluralité d'unités (100 à 600), et
l'unité de traitement de secours (31c) est conçue pour arrêter le fonctionnement d'au moins une unité de la pluralité d'unités (100 à 600).

11. Procédé de manipulation de supports de valeur réalisé par un appareil de manipulation de supports de valeur (1) selon l'une quelconque des revendications 1 à 10 pour manipuler des supports de valeur, le procédé de manipulation de supports de valeur comprenant :
l'acquisition d'informations sur un contrat de service de maintenance relatif à l'appareil de manipulation de supports de valeur (1),
la notification, à un opérateur, des informations du contrat de service de maintenance,
la transmission d'informations relatives à l'état anormal à un serveur de centre de maintenance,
la notification, à l'opérateur, d'une procédure de rétablissement pour éliminer l'anomalie lorsque l'appareil de manipulation de supports de valeur (1) se trouve dans un état anormal et qu'il n'existe aucun contrat en cours de validité, et
lorsque l'appareil de manipulation de supports de valeur (1) se trouve dans un état anormal et que le contrat de service de maintenance est en cours de validité, la mise en fonctionnement de l'appareil de manipulation de supports de valeur (1) dans un état de secours dans lequel une partie des fonctions de l'appareil de manipulation de supports de valeur (1) sont limitées ; des opérations de reprise après anomalie, dont l'ouverture d'une porte de l'appareil de manipulation de supports de valeur, étant également limitées, et l'unité de communication transmettant les informations relatives de l'état anormal au serveur du centre de maintenance afin de traiter l'anomalie.
